# EUROPÄISCHE PATENTSCHRIFT

(11) **EP 4 108 415 B1**
(45) Veröffentlichungstag und Bekanntmachung des Hinweises auf die Patenterteilung: **09.08.2023**
(21) Anmeldenummer: 22178835.9
(22) Anmeldetag: 14.06.2022
(51) Int. Cl.: B29C 49/22, B29C 49/50, B29C 49/04, B29L 9/00, B29L 23/20, B29L 31/00

(54) **VERFAHREN ZUR HERSTELLUNG EINES BEHÄLTERS**
METHOD FOR PRODUCING A CONTAINER
PROCÉDÉ DE FABRICATION D'UN RÉCIPIENT

(30) Priorität: 23.06.2021 DE 102021116277
(43) Veröffentlichungstag der Anmeldung: 28.12.2022
(73) Patentinhaber: Gaplast GmbH, 82442 Altenau (DE)
(72) Erfinder: Kneer, Roland, 82490 Farchant (DE); Kneer, Stephan, 82490 Farchant (DE); Yilginc, Kasim, 82487 Oberammergau (DE)
(74) Vertreter: Flosdorff, Jürgen

(56) Entgegenhaltungen:
- EP-B1- 0 567 574
- DE-C1- 19 737 964
- US-A1- 2015 266 199

## Beschreibung

Die Erfindung betrifft ein Verfahren zur Herstellung eines bevorzugt flaschenförmigen Behälters, der aus einem im wesentlichen starren Außenbehälter und einem leicht verformbaren Innenbeutel besteht, die aus thermoplastischen Kunststoffen bestehen, die keine Schweißverbindung miteinander eingehen, wobei der Behälter eine Behälteröffnung und wenigstens zwei Wandöffnungen in dem Außenbehälter hat, durch die ein Druckausgleich in den Zwischenraum zwischen dem Innenbeutel und dem Außenbehälter erfolgt, wenn Behälterinhalt abgegeben wird, wobei bei dem Verfahren ein aus wenigstens zwei Schläuchen bestehender Vorformling coextrudiert und zwischen den geöffneten Hälften einer Blasform angeordnet wird und die Blasform geschlossen wird, wenn der Vorformling die zur Herstellung des Behälters erforderliche Länge hat, wobei Überschussmaterial im Bodenbereich des herzustellenden Behälters abgequetscht und ein Steg aus verschweißtem Material des Außenbehälters entsteht, indem die verschweißte Bodennaht des Innenbeutels eingeklemmt und in axialer Richtung gehalten ist, und wobei der Vorformling durch ein Druckmedium zur Anlage an die Wandung der Blasform aufgeblasen und aus der Blasform entnommen wird, wonach die Wandöffnungen ausgebildet werden und der Innenbeutel von der Wand des Außenbehälters abgelöst und wieder daran angelegt wird.

Ein solches Verfahren ist seit längerem bekannt. Die DE 4139555 C2 offenbart einen so hergestellten Behälter, bei dem die Wandöffnungen dadurch ausgebildet werden, dass im Schulterbereich des flaschenförmigen Behälters das radial überstehende Material des Vorformlings beim Schließen der Blasform abgequetscht wird, wodurch unverschweisste, offene Öffnungen an den Schultern entstehen. Weitere Verfahren sind in den Patentschriften EP0567574B1 und US2015/266199A1 beschrieben.

Damit sich bei der Abgabe des Behälterinhalts der Innenbeutel flach zusammenlegen kann, schlägt die EP 0 912 420 B1 vor, die Wandöffnungen in dem Außenbehälter um 90° versetzt zu der Ebene auszubilden, die durch die Bodennaht und die Längsachse des Behälters definiert ist. Hierdurch lässt sich der Behälterinhalt mit einer verringerten Restmenge austragen, wobei auch ein kleinerer Unterdruck in dem Innenbeutel entsteht.

Um eine möglichst vollständige Ausbringung des Behälterinhalts mittels einer Airlesspumpe oder durch Ausübung eines äußeren Drucks bei einer Quetschflasche zu ermöglichen, hat es sich bewährt, vor dem Abfüllen des Behälters den Innenbeutel von der Wand des Außenbehälters abzulösen, an dem der Innenbeutel mit beträchtlichen Adhäsionskräften anliegt. Dabei hat sich gezeigt, dass das Ablösen vor allem im Bereich der Schulter eines Behälters nur unregelmäßig und unvollständig erfolgen kann, so dass eine kleine Restmenge des Behälterinhalts nicht austragbar ist. Es hat sich aber noch ein erheblich schwerwiegenderes Problem ergeben, wenn beim Ablösevorgang der Innenbeutel vor allem im Bereich des Übergangs zum Schulterbereich unregelmäßig verformt und teilweise gefaltet wird, was unter Umständen zu einem Weißbruch des Beutelmaterials führen kann, mit der Folge, dass durch die beschädigten Stellen die Diffusionsschutzschicht des Innenbeutels beschädigt oder der Beutel gar undicht werden kann.

Die Anmelderin hat entdeckt, dass der Innenbeutel beim Aufblasen des Vorformlings zur Anlage an die Wandung der Blasform in Umfangsrichtung eine unterschiedliche Wandstärke hat, und zwar derart, dass der Innenbeutel in dem Bereich der durch die Bodennaht verlaufenden vertikalen Ebene dicker ist als in den dazwischen liegenden Wandbereichen. Eine Erklärung hierfür kann darin zu sehen sein, dass der Vorformling beim Abquetschen der Bodennaht aus einer kreiszylindrischen Ausgangsform flach zusammen gedrückt wird, wobei das nachfolgende Aufblasen eine größere Kreiszylinderform erzeugt, mit der oben erwähnten größeren Wandstärke in dem Bereich über den Enden der Bodennaht.

Diese größere Wandstärke in dem genannten Umfangsbereich des aufgeblasenen Behälters kann beim Ablösen des Innenbeutels durch Einbringen von Luftdruck in Öffnungen des Außenbehälter, die gegenüber den verdickten Bereichen um 90° versetzt sind, zur Folge haben, dass der Innenbeutel beim Ablösen ungleichmäßig verformt wird, wobei sich insbesondere im Übergangsbereich zu dem Schulterabschnitt des Behälters faltenähnliche Verwerfungen ausbilden können, die ihrerseits zu einem Weißbruch des Innenbeutels führen können, durch den eine Dampfdiffusionsschicht des Innenbeutels beschädigt oder gar der Innenbeutel undicht werden kann. Ein derart beschädigter Behälter ist mitsamt dem Behälterinhalt unbrauchbar.

Der vorliegenden Erfindung liegt die Aufgabe zugrunde, ein Verfahren anzugeben, mit dem ein gebrauchsfähiger Behälter hergestellt werden kann, bei dem die oben dargestellte Beschädigung vermieden ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass bei dem fertig aufgeblasenen Behälter je ein Loch in der Wand des Außenbehälters an diametral gegenüber liegenden Stellen ausgebildet wird, die auf der Schnittlinie einer durch die Bodennaht und die Längsachse des Behälters definierten Ebene mit der Behälterwand liegt, und dass ein stiftförmiges Werkzeug den Innenbeutel durch die Löcher hindurch um eine vorbestimmte Strecke von der Wand des Außenbehälters zurück drückt und dabei von der Wand ablöst, wonach ein Druckmedium, vorzugsweise Druckluft durch die Löcher in den Zwischenraum zwischen dem Innenbeutel und dem Außenbehälter eingeführt wird, die im wesentlichen den gesamten Innenbeutel von der Wand des Außenbehälters ablöst.

Dabei kann das Druckmedium durch das stiftförmige Werkzeug eingeblasen werden, wenn dieses hohl ausgebildet ist, oder zum Beispiel durch einen Druckbehälter, in dem der Behälter angeordnet wird.

Die Löcher können in beliebiger Höhe des Behälters in dem genannten Umfangsbereich ausgebildet werden. Mit besonderem Vorteil wird aber vorgeschlagen, die Löcher im Schulterbereich des Behälters auszubilden, wenn dieser eine Flaschenform hat, wobei die Löcher auch dicht unter oder über dem Schulterbereich ausgebildet werden können.

Mit großem Vorteil ist außerdem vorgesehen, dass die Löcher durch einen Hohlmesserschnitt ausgebildet werden, der u.a. in der DE 197 37 964 C1 beschrieben ist. Es liegt aber auch im Rahmen der Erfindung, dass z.B. ein rotierende Rohrmesser verwendet wird, um die Durchgangslöcher in dem Außenbehälter zu erzeugen.

Mit dem erfindungsgemäßen Verfahren lässt sich der Innenbeutel über seinen gesamten Umfang glatt von der Wand des Außenbehälters lösen, wodurch eine Beschädigung des Innenbeutels oder gar dessen Undichtigkeit vermieden wird. Da der Innenbeutel gleichmäßig und vollständig von der Wand des Außenbehälters abgelöst werden kann, ist außerdem bei der Abgabe von Behälterinhalt vermieden, dass ein nennenswerter Rest des Inhalts nicht ausbringbar ist, wie dies bei einem unvollständigen Ablösevorgang der Fall ist.

Weitere Merkmale der Erfindung ergeben sich aus der nachfolgenden Beschreibung eines mit dem erfindungsgemäßen Verfahren hergestellten flaschenförmigen Behälters. Dabei zeigen:
- Figuren 1 A bis: 1D verschiedene Ansichten und einen Vertikal-Schnitt des Behälters;
- Figur 2: den Behälter mit Prägestift zum Ablösen des Innenbeutels von der Wand des Außenbehälters.

Der in den Figuren dargestellte Behälter 1 enthält einen Halsbereich 2, der über einen Schulterbereich 3 in den breiteren Bereich 4 übergeht. Der Behälter 1 besteht aus einem im wesentlichen steifen Außenbehälter 5 und einem leicht verformbaren Innenbeutel 6.

Am Boden des Behälters befindet sich eine geradlinige Quetschnaht 7, in der der Innenbeutel 6 gehalten ist.

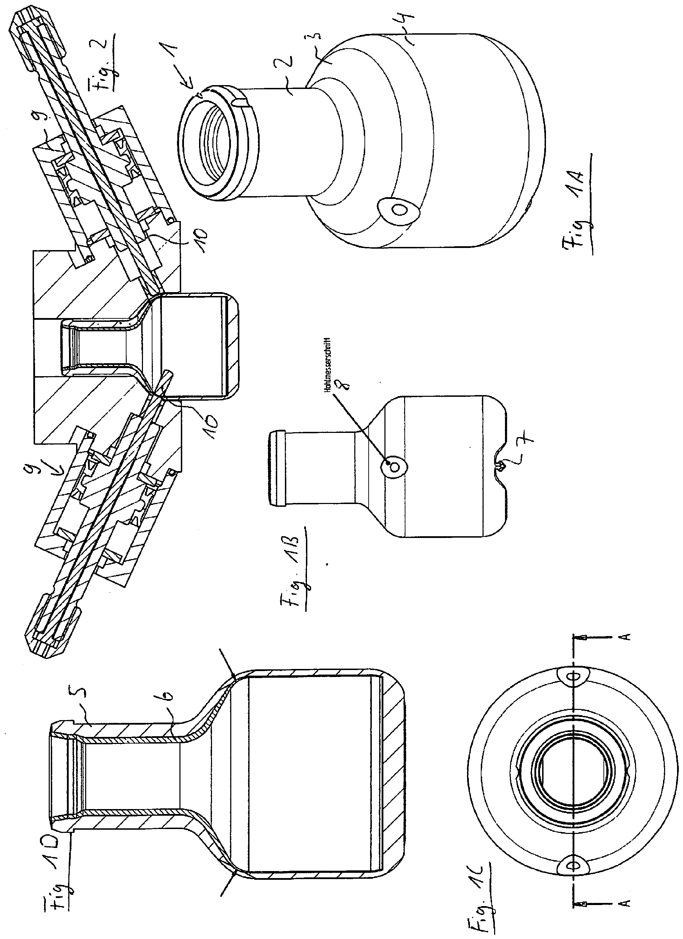

Figur 1 B zeigt in einer Seitenansicht ein durch die Wand des Außenbehälters 5 hindurchgehendes Loch 8, das sich in der vertikalen Ebene befindet, die durch die verschweißte Bodennaht 7 und die Mittellängsachse des Behälters 1 verläuft. Die Figuren 1 C und 1D zeigen, dass zwei Löcher 8 diametral gegenüberliegend in der Wand des Außenbehälters 6 ausgebildet sind. D.h., dass die beiden Löcher 8 nicht in Umfangsrichtung gegenüber dieser Ebene versetzt sind, wie dies beim Stand der Technik der Fall ist.

Die beiden Löcher 8 befinden sich im Übergangsbereich des breiten Teils 4 des Behälters 1 zu dessen Schulterbereich 3.

Die Figuren lassen außerdem erkennen, dass die Löcher 8 nicht durch ein Bohrwerkzeug, sondern durch einen Hohlmesserschnitt ausgebildet sind, wie dies bevorzugt ist.

Figur 2 zeigt ein Gerät 9 mit einem Prägestift 10, der durch das Loch 8 hindurch den Innenbeutel 6 um eine bestimmte Strecke ins Innere des Behälters 1 drückt, um den Innenbeutel 6 in dem umliegenden Bereich von der Wand des Außenbehälters 5 abzulösen, woraufhin der Ablösevorgang entweder durch das Gerät 9 oder ein anderes Gerät durch Einblasen von Druckluft fortgesetzt wird. Figur 2 zeigt im rechten Teil ein Gerät 9 mit zurückgezogenem Prägestift 10.

## Patentansprüche

1. Verfahren zur Herstellung eines Behälters (1) bestehend aus einem im wesentlichen steifen Außenbehälter (5) und einem leicht verformbaren Innenbeutel (6) aus keine Schweißverbindung miteinander eingehenden thermoplastischen Kunststoffen, mit einer Behälteröffnung und Löchern (8) in dem Außenbehälter, durch die ein Druckausgleich in dem Zwischenraum zwischen dem Innenbeutel (6) und dem Außenbehälter (5) erfolgt, wobei ein aus wenigstens zwei Schläuchen bestehender Vorformling coextrudiert und zwischen den geöffneten Hälften einer Blasform angeordnet wird und die Blasform geschlossen wird, wenn der Vorformling die zur Herstellung des Behälters erforderliche Länge hat, wobei Überschussmaterial im Bodenbereich des herzustellenden Behälters abgequetscht und ein Steg aus verschweißtem Material des Außenbehälters ausgebildet wird, in dem die verschweißte Bodennaht (7) des Innenbeutels eingeklemmt und in axialer Richtung gehalten ist, und der Vorformling durch ein Druckmedium zur Anlage an die Wandung der Blasform aufgeblasen und aus der Blasform entnommen wird, wonach Löcher in der Wand des Außenbehälters (5) ausgebildet werden, der Innenbeutel (6) von der Wand des Außenbehälters abgelöst wird und wieder daran angelegt wird,
**dadurch gekennzeichnet,**
**dass** je ein Loch in der Wand des Außenbehälters an diametral gegenüberliegen Stellen ausgebildet wird, die auf der Schnittlinie einer durch die Bodennaht und die Längsachse des Behälters definierten Ebene mit der Behälterwand liegen und
**dass** ein stiftförmiges Werkzeug den Innenbeutel durch die Löcher hindurch um eine vorbestimmte Strecke von der Wand des Außenbehälters zurückdrückt und dabei von der Wand ablöst, wonach ein Druckmedium, vorzugsweise Druckluft, durch die Löcher in den Zwischenraum zwischen dem Innenbeutel und dem Außenbehälter eingeführt wird, die den Innenbeutel von der Wand des Außenbehälters ablöst.

2. Verfahren nach Anspruch 1, wobei der Behälter eine Flaschenform mit einem Schulterbereich hat,
**dadurch gekennzeichnet,**
**dass** die Löcher im Schulterbereich oder dicht darunter ausgebildet werden.

3. Verfahren nach Anspruch 1 oder 2,
**dadurch gekennzeichnet,**
**dass** die Löcher durch einen Hohlmesserschnitt ausgebildet werden.

4. Verfahren nach Anspruch 1 oder 2,
dass die Löcher durch ein rotierendes Rohrmesser ausgebildet werden.

5. Verfahren nach einem der Ansprüche 1 bis 4,
**dadurch gekennzeichnet,**
**dass** die Druckluft durch das stiftförmige Werkzeug eingeführt wird.

## Claims

1. A method of manufacturing a container (1) consisting of a substantially stiff outer container (5) and readily deformable inner bag (6) of thermoplastic plastic materials, which do not form a weld connection with one another, with a container opening and holes (8) in the outer container, through which a pressure balance occurs in the gap between the inner bag (6) and the outer container (5), wherein a preform consisting of at least two tubes is coextruded and is arranged between the open halves of a blow mold and the blow mold is closed when the preform has the length necessary for the manufacture of the container, wherein excess material in the base region of the container to be manufactured is squeezed out and a web is formed from welded material of the outer container, in which the welded base seam (7) of the inner bag is clamped and held in the axial direction and the preform is inflated by a pressure medium into engagement with the wall of the blow mold and is removed from the blow mold, whereafter holes are formed in the wall of the outer container (5), the inner bag (6) is detached from the wall of the outer container and again applied to it, **characterized in that** a respective hole is formed in the wall of the outer container at diametrically opposed positions, which lie on the intersection line of a plane defined by the base seam and the longitudinal axis of the container with the container wall and that a pin-shaped tool presses the inner bag through the holes by a predetermined distance back from the wall of the outer container and thus detaches it from the wall, whereafter a pressure medium, preferably compressed air, is introduced into the gap between the inner bag and the outer container, which detaches the inner bag from the wall of the outer container.

2. A method as claimed in Claim 1, wherein the container has a bottle shape with a shoulder region, **characterized in that** the holes are formed in the shoulder region or closely beneath it.

3. A method as claimed in Claim 1 or 2, **characterized in that** the holes are formed by cutting with a circular cutter.

4. A method as clamed in Claim 1 or 2, **characterized in that** the holes are formed by a rotating tubular knife.

5. A method as claimed in one of Claims 1 to 4, **characterized in that** the compressed air is introduced through the pin-shaped tool.

## Revendications

1. Procédé pour fabriquer un contenant (1) constitué d'un contenant extérieur (5) sensiblement rigide et d'un sachet intérieur (6) légèrement déformable composé de matières synthétiques thermoplastiques ne subissant aucune liaison par soudage les unes avec les autres, avec une ouverture de contenant et des trous (8) dans le contenant extérieur, par lesquels une compensation de pression a lieu dans l'espace intermédiaire entre le sachet intérieur (6) et le contenant extérieur (5), dans lequel une préforme constituée d'au moins deux tuyaux flexibles est coextrudée et est disposée entre les moitiés ouvertes d'un moulage de soufflage et le moule de soufflage est fermé lorsque la préforme présente la longueur requise pour fabriquer le contenant, dans lequel l'excédent de matériau est pincé dans la zone de fond du contenant à fabriquer et une entretoise est réalisée à partir de matériau soudé du contenant extérieur, dans lequel la couture de fond (7) soudée du sachet intérieur est coincée et est maintenue dans une direction axiale et la préforme est appliquée par soufflage par un milieu de pression pour venir en appui sur la paroi du moule de soufflage et est retirée du moule de soufflage, des trous étant réalisés après quoi dans la paroi du contenant extérieur (5), le sachet intérieur (6) est détaché de la paroi du contenant extérieur et y est de nouveau posé,
**caractérisé en ce**
**qu'**un trou est respectivement réalisé dans la paroi du contenant extérieur sur des emplacements diamétralement opposés, qui se situe avec la paroi de contenant sur une ligne de coupe d'un plan défini par la couture de fond et l'axe longitudinal du contenant,
**qu'**un outil en forme de tige repousse le sachet intérieur à travers les trous de part en part d'une distance parcourue prédéfinie de la paroi du contenant extérieur et le détache ce faisant de la paroi, un milieu de pression, de préférence de l'air comprimé, étant introduit par la suite par les trous dans l'espace intermédiaire entre le sachet intérieur et le contenant extérieur, qui détache le sachet intérieur de la paroi du contenant extérieur.

2. Procédé selon la revendication 1, dans lequel le contenant présente une forme de bouteille avec une zone d'épaulement,
**caractérisé en ce**
**que** les trous sont réalisés dans la zone d'épaulement ou à proximité en dessous.

3. Procédé selon la revendication 1 ou 2,
**caractérisé en ce**
**que** les trous sont réalisés par une découpe de couteau creux.

4. Procédé selon la revendication 1 ou 2,
**caractérisé en ce que** les trous sont réalisés par un tube coupant rotatif.

5. Procédé selon l'une quelconque des revendications 1 à 4,
**caractérisé en ce**
**que** l'air comprimé est introduit à travers l'outil en forme de tige.
